# FASCICULE DE BREVET EUROPEEN

(11) **EP 0 407 513 B1**
(45) Date de publication et mention de la délivrance du brevet: **28.07.1993**
(21) Numéro de dépôt: 90900045.7
(22) Date de dépôt: 12.01.1990
(51) Int. Cl.: E01C 7/10, C04B 28/26, C09K 17/00

(54) **PROCEDE DE STABILISATION D'UNE AIRE DE TERRAIN MEUBLE**
VERFAHREN ZUR STABILISIERUNG EINER LOCKEREN BODENFLÄCHE
METHOD FOR STABILIZING LOOSE GROUND

(30) Priorité: 16.01.1989 FR 8900574
(43) Date de publication de la demande: 16.01.1991
(73) Titulaire: Société de Diffusion de Recherches Techniques et Financières S.A., CH-3960 Sierre (CH)
(72) Inventeur: VOEGELI, Laurent, CH-3960 Sierre (CH)
(74) Mandataire: Nithardt, Roland
(86) Numéro de dépôt international: CH9000006
(87) Numéro de publication internationale: WO9008226

(56) Documents cités:
- EP-A- 0 015 236
- WO-A- /06400
- FR-A- 1 082 154
- US-A- 3 598 027

## Description

La présente invention concerne un procédé de stabilisation d'une aire de terrain meuble, notamment pour la construction de voies de communication, de routes, de pistes pour aéronefs, de soubassements de voies ferrées, d'accotements routiers, de tranchées, ou pour la réalisation de surfaces de stockage, de plaques rigides ou de dalles porteuses ainsi que de tout revêtement rigide pour supporter des charges mobiles ou immobiles, le procédé comprenant au moins une imprégnation des substances minérales présentes sur le site avec un liant à base de silicates alcalins de sodium et/ou de potassium, au moins un adjuvant plastifiant et au moins un réactif sous forme liquide pour former un gel de silice.

Plusieurs techniques de construction de routes et de pistes sont actuellement utilisées et mettent en oeuvre des matériaux extrêmement différents. D'une manière générale, la construction de routes et/ou de pistes pour aéronefs est effectuée par apport de matériaux, tels que des rochers concassés avec une granulométrie déterminée. Selon les cas, divers liants peuvent être utilisés pour associer ces matériaux minéraux. Ces liants sont soit du type hydraulique tel que le ciment et la chaux, soit du type organique fossile tel que le bitume. Une ou plusieurs couches de mortier réalisées avec les mêmes liants terminent généralement la chaussée.

Ces techniques traditionnelles nécessitent dans tous les cas un apport de matériaux d'origine rocheuse sous la forme de gravillons et/ou de sable siliceux déposés sur le tracé de la route et/ou de la piste préalablement décapée et nivelée.

Pour la confection du soubassement, ces matériaux, auxquels on ajoute dans certains cas une certaine quantité de liant hydraulique, sont compactés et vibrés afin d'obtenir la résistance mécanique en compression nécessaire pour résister aux charges des engins qui sont appelés à y circuler par la suite.

Le soubassement est habituellement complété par une couche de finition, dite couche d'usure, constituée soit par une couche en béton de ciment, soit par une couche d'enrobés bitumineux ou par une combinaison de telles couches.

Selon les techniques utilisées, les voies de circulation réalisées sont appelées chaussées à circulation légère ou chaussées à circulation lourde, et sont destinées à la circulation de véhicules respectivement légers ou lourds.

Ces chaussées sont rigides ou souples selon leur constitution. Toutefois, tous les procédés traditionnels présentent un certain nombre d'inconvénients.

Le premier, qui n'est pas des moindres, est dû au fait que ces procédés nécessitent un apport important de matériaux rocheux de granulométrie spécifique. Ces matériaux doivent parfois être extraits de carrières lointaines et transportés sur le site d'utilisation, ce qui a pour conséquence directe une élévation conséquente du coût des ouvrages.

Le second, résultant directement du premier, est dû au fait que l'apport de ces matériaux oblige l'entrepreneur à organiser une navette de véhicules de transport et à installer à courte distance du chantier, des zones tampon pour le dépôt de ces matériaux.

En troisième lieu, la mise en place de ces matériaux oblige l'entrepreneur à procéder à l'enlèvement de la couche de terre végétale se trouvant sur le site, terre qui devra elle-même être évacuée vers une zone de décharge. De plus, les matériaux de construction remplaçant les matériaux d'origine doivent être étalés, nivelés et compactés de manière à constituer la voie souhaitée.

Outre les inconvénients ci-dessus, les techniques de construction sont à l'origine d'autres inconvénients propres à la voie de communication elle-même. En effet, les routes et les pistes réalisées selon les procédés conventionnels présentent un degré de perméabilité suffisant pour autoriser la pénétration des eaux soit par ruissellement, soit par infiltration, ce qui constitue la cause de désordres importants. De ce fait, ces constructions traditionnelles obligent l'entrepreneur à prévoir un drainage suffisant sous les ouvrages réalisés.

Dans les contrées soumises à des cycles de gel et de dégel, la pénétration de l'eau détruit la cohésion de la chaussée qui subit des dégradations relativement rapides. Pour limiter les dégâts causés pendant les périodes critiques, les instances communales ou nationales chargées de la gestion de ces voies de communication sont amenées à prendre des mesures tendant à restreindre la circulation sur certaines voies telles que certaines routes de montagne, en installant par exemple des barrières de dégel restreignant la circulation pendant certaines périodes ou pour certains types de véhicules tels que par exemple les poids lourds.

La présente invention se propose de pallier les différents inconvénients mentionnés ci-dessus et de mettre à la disposition des entrepreneurs un procédé de contruction de toutes sortes de voies de communication ou d'autres surfaces stabilisées, permettant d'éviter la manutention de matériaux nécessités par les techniques traditionnelles. En outre, les voies ainsi élaborées ne comportent pas les défauts inhérents aux voies traditionnelles et dus en particulier à leur perméabilité aux eaux d'infiltration et de ruisellement.

Le document EP-A-0 015 236 décrit un procédé conforme au préambule de la revendication 1, où l'on stabilise un sol en l'imprégnant successivement de deux composants appliqués séparément sous forme liquide. Le premier composant contient des silicates alcalins et un plastifiant, tandis que le second contient notamment des réactifs en solution et une charge plastifiante, en vue de former un gel de silice dans le sol. Cela nécessite deux applications dosées des composants sur le sol à traiter, et les conditions d'imprégnation du sol risquent d'être différentes d'une application à l'autre.

Par rapport à cet état de la technique, le procédé selon l'invention est caractérisé en ce qu'il comporte une première étape dans laquelle on prépare un mélange sous forme liquide comprenant ledit liant, le ou les adjuvants plastifiants et le ou les réactifs liquides, et une seconde étape dans laquelle on effectue ladite imprégnation des substances minérales au moyen dudit mélange liquide avant le début de la prise du liant; en ce qu'au moins l'une des substances suivantes est utilisée comme réactif liquide pour former un gel de silice : acides organiques et esters méthyliques et/ou éthyliques; et en ce que le pourcentage de véhicule liquide contenu dans le mélange est compris entre 30 et 150% par rapport au poids de silicates.

Selon un mode de réalisation préféré, le réactif liquide contient de l'eau. Selon un premier mode d'application pratique avantageux, on utilise au moins un adjuvant plastifiant comprenant des substances minérales telles que des argiles.

Selon un deuxième mode d'application pratique avantageux, on utilise au moins un adjuvant plastifiant comprenant des substances organiques tel les que la caséine.

Selon un troisième mode d'application pratique avantageux, on utilise au moins un adjuvant plastifiant comprenant des substances végétales telles que des huiles végétales.

Selon un quatrième mode d'application pratique avantageux, on utilise au moins un adjuvant plastifiant comprenant des substances synthétiques telles que la carboxylméthylcellulose, des sels de sodium, de l'éthylèneglycol, de la glycérine, des résines acryliques et/ou vinyliques, des émulsions bitumineuses, de la blanose.

Selon une variante particulièrement intéressante, on ajoute également des charges minérales sous la forme de particules minérales finement broyées, ainsi que des inhibiteurs de charge, afin de favoriser la pénétration du véhicule liquide dans les substances minérales du site.

Les réactifs pour former le gel de silice sont choisis parmi les substances suivantes : chlorures tels que le chlorure de sodium et le chlorure de calcium, sulfates tels que le sulfate d'aluminium, carbonates tels que le bicarbonate de sodium, aluminates tels que l'aluminate de sodium, produits fluorés tels que le fluorosilicate de sodium, acides minéraux et acides organiques, esters tels que les diesterméthyliques et/ou éthyliques, qui sont utilisés en dilution et/ou en suspension dans un milieu liquide.

De préférence, on procède à l'imprégnation des substances minérales présentes sur le site avec ledit mélange, à une température ambiante comprise entre 5 et 35°C.

Le pourcentage de véhicule liquide contenu dans le mélange est avantageusement compris entre 30 et 150% par rapport au poids de silicates.

Lorsque les substances minérales présentes sur le site sont de nature saumâtre, on peut procéder à la préparation d'une couche de fond en réalisant un malaxage préalable du sol avec apport d'une dose supplémentaire de chlorure de sodium et en déposant une couche de finition superficielle après dessication de la couche de fond.

Dans le cas où les substances minérales présentes sur le site comportent de la terre végétale, on peut procéder à un apport de sable siliceux ou calcaire avant l'imprégnation au moyen dudit mélange.

Selon une variante préférée du procédé, l'on traite par pulvérisation, imprégnation et malaxage les substances minérales présentés sur le site.

La présente invention sera mieux comprise en référence à la description de plusieurs exemples de réalisation et de divers modes d'application adaptés à des sites et/ou des conditions climatiques différents.

Comme mentionné précédemment, le liant à base de silicates alcalins de sodium et/ou de potassium, qui est utilisé pour lier entre elles les particules minérales, est mélangé à des adjuvants qui sont choisis et dosés en fonction, d'une part des résultats de résistance en compression recherchés pour les ouvrages réalisés, et d'autre part en fonction de la nature des sols rencontrés lors des travaux. Les conditions climatologiques peuvent également jouer un rôle important aussi bien lors de la mise en oeuvre que pour la pérennité des ouvrages réalisés.

La technique consistant à utiliser des silicates alcalins auxquels on ajoute un réactif pour obtenir un gel de silice est connue dans les techniques d'étanchéification des sols en profondeur par le biais d'injections sous haute pression.

Toutefois, les gels de silice n'ont à ce jour pas été utilisés pour la confection de couches superficielles stabilisées, car les tentatives faites dans ce domaine n'ont jamais permis d'éliminer un certain nombre de défauts qui sont les suivants :
- a) la détérioration rapide des surfaces traitées en raison de la solubilité à l'eau des gels utilisés,
- b) la fissuration entraînée par des effets de retrait des gels de silice lors de leur prise. Cette fissuration est appelée effet de faïençage et rend la surface relativement cassante.

La solution proposée par la présente invention permet de supprimer ces inconvénients par le fait que l'on introduit dans le liant des composés plastifiants qui ont pour conséquences de rendre les gels moins cassants, de réduire les effets de retrait et de rendre les mortiers obtenus à base de gels de silice totalement insolubles à l'eau.

Différents paramètres extérieurs doivent être pris en considération lors de la mise en oeuvre du procédé selon l'invention. Parmi ces paramètres il convient de mentionner :
1) la température ambiante et les températures des sols au moment du traitement;
2) la nature des sols à traiter;
3) la composition chimique des sols à traiter;
4) la granulométrie des constituants des sols;
5) les conditions hygrométriques d'application.

Dans la pratique, le procédé peut être appliqué sans difficultés et sans précautions particulières à des températures comprises entre 5 et 25°C. A partir de températures supérieures à 25°C, le temps de prise diminue sensiblement de moitié pour une élévation de température de 10°C.

A titre d'exemple, le temps de prise moyen à 25°C est de l'ordre de 60 mn. Ce temps de prise est réduit à 30 mn pour une température extérieure de l'ordre de 35°C. Des difficultés pratiques peuvent apparaître lorsque les températures de surface de sol sont très élevées et décroissent rapidement lorsque l'on descend en profondeur. Dans ce cas il conviendra soit de stabiliser la température par des traitements extérieurs tels qu'un arrosage préliminaire, un brassage ou tout autre moyen approprié, soit d'effectuer le traitement de nuit ou le matin lorsque le sol s'est refroidi. D'une manière générale, l'apport d'eau nécessité du fait que le liant est utilisé en phase aqueuse permet d'assurer un phénomène de régulation de la température en raison de l'évaporation, même si les températures superficielles du sol traité sont de l'ordre de 50°C sur une profondeur pouvant aller jusqu'à 0,15 m. Par conséquent, les températures réelles de traitement ne dépassent pratiquement jamais 35°C, ce qui laisse un temps de prise d'environ 30 mn qui est habituellement suffisant pour effectuer le compactage nécessaire après l'application du mélange de liant et des différents additifs.

Parmi les paramètres liés à la nature des sols à traiter, il convient de tenir compte de l'indice de vide de ce sol. A titre d'exemple, on notera que pour les conditions de traitement les plus mauvaises, un sable de granulométrie homogène peut présenter un indice de vide de l'ordre de 36%. Selon que la nature des sols à traiter est argileuse, limoneuse, calcaire ou siliceuse, ce qui détermine en fait sa plasticité, l'entrepreneur devra déterminer s'il convient ou non de rajouter des composants minéraux tels que par exemple des sables siliceux ou de l'argile etc.

De même, la composition chimique des sols et en particulier son pH doit être contrôlé parce qu'il a une influence sur les temps de prise du liant.

La granulométrie des sols à traiter conditionne directement le taux de résistance à la compression en l'absence de tout apport de liant. La granulométrie d'un sol à traiter peut, le cas échéant, être modifiée par apport de matière, si la résistance finale de l'ouvrage réalisé selon le procédé de J'invention nécessite un tel apport.

Les conditions hygrométriques de J'air ambiant et du sol sont en général des éléments déterminants pour définir les quantités d'eau devant être additionnées au liant. Dans la pratique, les quantités d'eau utilisées ne dépassent jamais 120% en poids des silicates alcalins utilisés.

D'une manière générale, le procédé utilisant le liant et les composants annexes mentionnés ci-dessus, permet de réaliser toute surface, plaque, dalle, route, voie de surface stabilisée, quelle que soit la nature des sols à l'exception des terrains saumâtres. Ces derniers requièrent des précautions particulières et notamment un malaxage préalable du sol avec apport d'une dose supplémentaire de chlorure de sodium dans une proportion pouvant atteindre 5% du poids du terrain à traiter. Dans ce cas, le liant est de préférence appliqué par malaxage sans durcisseur. Après dessication du mélange, une couche de finition superficielle identique à celle obtenue par les traitements sur sol non saumâtre peut être appliquée sur la couche de base.

Lorsque la matière minérale présente sur le site est une terre végétale ou une argile particulièrement malléable, un apport de sable siliceux et/ou calcaire par malaxage pourra être nécessaire si l'on veut obtenir des résistances en compression élevées.

Différentes techniques d'application des liants et des composés annexes, notamment des adjuvants plastifiants et des réactifs, ont été mises au point. En général, l'ensemble des composants à l'exception des réactifs peut être mélangé à l'avance et stocké pendant des périodes qui peuvent atteindre plusieurs années dans la mesure où ils sont abrités du gel et de la lumière.

L'incorporation du réactif de prise ou durcisseur sera effectuée quelques minutes avant l'application du mélange de liant, du véhicule liquide et des adjuvants sur le sol à traiter, afin de laisser à l'entrepreneur le temps nécessaire au compactage du sol après le traitement, ce dernier devant bien entendu intervenir impérativement avant le début de la prise du liant. l'addition du réactif peut avantageusement être effectuée au moyen d'une pompe doseuse installée directement sur les machines d'application du mélange.

Différentes formules de traitement sont données ci-dessous sous la forme de trois exemples concrets d'application du procédé selon l'invention.

### Exemple I

Formule utilisée pour un traitement de sol sablonneux :
- silicate de sodium de rapport pondéral 3/3 à 4 100 kg
- résine acrylique de type soit Acronal.S.400 de B.A.S.F, soit ARMH de Rhône-Poulenc de 2 à 5 kg
- Monoéthylène glycol 2 kg
- Teepol ^{R} (produit SHELL) 0,1 à 0,5 kg
- eau (pH neutre) 80 kg
- durcisseur-réactif type D.600 de Rhône-Poulenc 22 kg

### Exemple II

Formule utilisée pour un traitement de terre végétale et de sable :
- silicate de sodium RP. 3.3/3.4 Type 7N34 et/ou 5N40 de R.P. 100 kg
- résine acrylique 15 kg
- Teepol ^{R} 0,2 kg
- durcisseur-réactif 25 kg
- eau 5 kg

### Exemple III

Formule utilisée pour un traitement de finition de la surface de sable :
- silicate de sodium 100 kg
- résine acrylique (ARMH de Rhône-Poulenc) 50 kg
- durcisseur-réactif 25 kg
- eau 50 kg
- siliconate 51T (silicone en phase aqueuse) 20 kg

Dans certains cas extrêmes où le pourcentage d'eau dans le sol est de l'ordre de 35%, ce qui est par exemple le cas de sables saturés d'eau, la quantité d'eau ajoutée au liant devra être minimale de telle manière que la quantité d'eau totale comprenant celle qui est mélangée au liant et celle qui est contenue dans le sol à traiter ne dépasse pas les limites définies précédemment. Dans certains cas, le liant peut être appliqué en l'état, la quantité d'eau contenue dans les silicates alcalins étant suffisante pour assurer la réaction de formation du gel de silice.

D'une manière générale, les bases de calcul pour l'apport d'eau dans le mélange liant-adjuvant sont définies de la manière suivante :
- pour application du liant sur un sol très perméable, tel que le sable, le pourcentage d'eau calculé par rapport au poids de silicates alcalins pourra varier entre un minima de 30% et un maxima de 120%.
- Pour l'application du liant sur des sols moins perméables, le pourcentage d'eau varie entre 0 et 50%.
- Pour l'application du liant comme couche de finition, ou couche d'usure superficielle, le pourcentage de l'eau est compris entre 0 et 120% du poids de silicates.

Les proportions sont déterminées in-situ en fonction du degré d'humidité du sol à traiter selon une règle qui définit que la teneur en eau du terrain sur le site plus l'eau additionnée au liant est comprise entre 30 et 120% du poids de silicates lorsque le mélange est appliqué par pulvérisation, épandage et/ou imprégnation.

lorsque le mélange est appliqué par malaxage, la règle de détermination de la teneur en eau prévoit que la teneur en eau du terrain sur le site additionnée au volume d'eau à mélanger au liant et aux adjuvants est comprise entre 0 et 50% du poids de silicates.

Lors de l'application d'une couche superficielle de finition, le degré d'humidité du sol n'intervient plus et le pourcentage d'eau à mélanger au véhicule liquide et aux adjuvants est compris entre 0 et 120% du poids de silicates. La quantité d'eau est directement liée à la viscosité du produit final que l'on veut obtenir et à la résistance à l'abrasion de la couche que l'on veut réaliser.

A titre d'exemple, une couche de finition superficielle réalisée avec un apport d'eau de 120% et appliquée sur un sol sablonneux sec ayant subi un traitement de stabilisation par imprégnation ou malaxage, permet d'assurer un durcissement de la couche superficielle résistant à l'arrachement de particules de sable au contact des pneumatiques d'un véhicule.

Sur un sol sablonneux dont la teneur en eau est proche de la saturation, c'est-à-dire contenant environ 30% de volume d'eau, l'application par pulvérisation d'une couche superficielle contenant environ 5% d'eau du poids de silicates, produira les mêmes effets de durcissement superficiel et de fixation des particules de sable libres en surface.

D'une manière générale, l'utilisation de plastifiants sous forme de résines de synthèse ou d'autres substances décrites précédemment, a pour effet de diminuer la dureté du gel de silice et de favoriser une certaine souplesse de ce gel qui augmente sa résistance au cisaillement. La proportion d'adjuvants plastifiants incorporés dans les silicates alcalins ne doit pas dépasser 50% mais pourra être réduite à une valeur inférieure à 1%. La quantité d'adjuvants plastifiants est définie en fonction de différents paramètres liés à la qualité des sols traités, et au degré de résistance que l'on désire obtenir et au coût de l'ouvrage.

l'épaisseur de la couche à traiter dépend, d'une part de la nature des sols à traiter et d'autre part de l'utilisation finale qui est envisagée pour cette couche. Il est bien entendu que la résistance de la couche est directement liée à son épaisseur. Par conséquent, une piste d'aviation destinée à accueillir de gros porteurs pouvant atteindre 50 tonnes en pleine charge n'aura pas la même épaisseur qu'un chemin de vignes destiné à permettre la circulation de petites machines agricoles.

A titre d'exemple, une piste d'aviation sur sable ayant subi un traitement par malaxage sur une profondeur de 0,40 m, suivi d'une application de couche superficielle sur un sol préalablement traité par imprégnation sur une profondeur de 0,50 m puis compacté, peut recevoir de gros porteurs de 50 tonnes, cela si la piste est réalisée sur un terrain strictement sablonneux.

Il est certain que l'utilisation d'un liant sous forme liquide en phase aqueuse ou dissous dans un autre solvant approprié qui pourrait être dans certains cas un alcool ou un solvant organique, offre de nombreux avantages par rapport à l'utilisation de liants hydrauliques en poudre tels que le ciment ou la chaux.

L'un des avantages du traitement selon l'invention sur les traitements traditionnels du type par enrobage bitumineux est l'absence d'un phénomène de fluage dû à des contraintes thermiques répétitives.

Un autre avantage du procédé est dû à l'étanchéité des sols traités ce qui élimine les remontées d'eau par capillarité, les remontées de particules fines entraînées par l'eau et l'élimination de l'infiltration de l'eau. Il en résulte la suppression des risques d'effet de sape dus aux migrations souterraines occasionnées par l'eau, des risques de transformation dans le temps de la nature granulométrique des chaussées par migration de particules argileuses, ainsi que des risques de gonflement occasionnés par le gel de l'eau d'infiltraiion.

Pour améliorer les propriétés hydrophobes des ouvrages réalisés, on peut mélanger au liant des substances couramment commercialisées telles que le siliconate 51.T fabriqué par la société française Rhône-Poulenc. La proportion de telles substances peut varier entre 2 et 20% selon les résultats que l'on veut obtenir. On notera que des substances à base de silicone entraînent une diminution de la résistance à la compression mais favorisent les qualités hydrophobes du liant. Un compromis devra être réalisé en fonction des propriétés que l'on souhaite atteindre.

L'utilisation d'émulsions bitumineuses comme adjuvants plastifiants permet de donner un aspect traditionnel aux routes ou aux chaussées tout en réduisant considérablement la sensibilité aux chocs thermiques par rappport à celle des voies de communication réalisées selon les procédés traditionnels. lorsque les émulsions bitumineuses, qui sont réalisées par un mélange de bitume et d'eau brassé par des turbines à très grande vitesse, sont utilisées en combinaison avec les liants alcalins selon le procéde de l'invention, le bitume devient quasiment insensible aux effets thermiques. Ces émulsions bitumineuses employées comme adjuvants plastifiants sont des émulsions anioniques, c'est-a-dire basiques dont le pH est approximativement égal à 9. La proportion d'émulsions bitumineuses introduites dans le mélange liantsupport liquide peut varier de 15 à 90% par rapport au poids des silicates utilisés.

Ces émulsions sont avantageusement utilisées pour la réalisation de couches superficielles de finition ou d'usure.

La présente invention n'est pas limitée aux formes de réalisation décrites, mais elle peut subir différentes modifications sans sortir du cadre des revendications et se présenter sous diverses variantes évidentes pour l'homme de l'art. En particulier, la proportion des adjuvants peut être modifiée en fonction des utilisations. Des mélanges de différents adjuvants peuvent également être utilisés pour certaines applications particulières.

## Revendications

1. Procédé de stabilisation d'une aire de terrain meuble, notamment pour la construction de voies de communication, de routes, de pistes pour aéronefs, de soubassements de voies ferrées, d'accotements routiers, de tranchées, ou pour la réalisation de surfaces de stockage, de plaques rigides ou de dalles porteuses ainsi que de tout revêtement rigide pour supporter des charges mobiles ou immobiles, le procédé comprenant au moins une imprégnation des substances minérales présentes sur le site avec un liant à base de silicates alcalins de sodium et/ou de potassium, au moins un adjuvant plastifiant et au moins un réactif sous forme liquide pour former un gel de silice, le procédé étant caractérisé en ce qu'il comporte une première étape dans laquelle on prépare un mélange sous forme liquide comprenant ledit liant, le ou les adjuvants plastifiants et le ou les réactifs liquides, et une seconde étape dans laquelle on effectue ladite imprégnation des substances minérales au moyen dudit mélange liquide avant le début de la prise du liant; en ce qu'au moins l'une des substances suivantes est utilisée comme réactif liquide pour former un gel de silice : acides organiques et esters méthyliques et/ou éthyliques; et en ce que le pourcentage de véhicule liquide contenu dans le mélange est compris entre 30 et 150% par rapport au poids de silicates.

2. Procédé selon la revendication 1, caractérisé en ce que le réactif liquide contient de l'eau.

3. Procédé selon la revendication 1, caractérisé en ce que l'on utilise au moins un adjuvant plastifiant comprenant des substances minérales telles que des argiles.

4. Procédé selon la revendication 1, caractérisé en ce que l'on utilise au moins un adjuvant plastifiant comprenant des substances organiques telles que la caséine.

5. Procédé selon la revendication 1, caractérisé en ce que l'on utilise au moins un adjuvant plastifiant comprenant des substances végétales telles que des huiles végétales.

6. Procédé selon la revendication 1, caractérisé en ce que l'on utilise au moins un adjuvant plastifiant comprenant des substances synthétiques telles que la carboxylméthylcellulose, des sels de sodium, de l'éthylèneglycol, de la glycérine, des résines acryliques et/ou vinyliques, des émulsions bitumineuses, de la blanose.

7. Procédé selon la revendication 1, caractérisé en ce que l'on ajoute au mélange des charges minérales sous la forme de particules minérales finement broyées.

8. Procédé selon la revendication 7, caractérisé en ce que l'on ajoute également des inhibiteurs de charge.

9. Procédé selon la revendication 1, caractérisé en ce que les réactifs pour former le gel de silice comprennent en outre au moins une des substances suivantes : chlorures tels que le chlorure de sodium et le chlorure de calcium, sulfates tels que le sulfate d'aluminium, carbonates tels que le bicarbonate de sodium, aluminates tels que l'aluminate de sodium, produits fluorés tels que le fluorosilicate de sodium et acides minéraux, qui sont utilisé es en dilution et ou en suspension dans un milieu liquide.

10. Procédé selon la revendication 1, caractérisé en ce que l'on procède à l'imprégnation des substances minérales présentes sur le site avec ledit mélange, à une température ambiante comprise entre 5 et 35°C.

11. Procédé selon la revendication 1, dans lequel les substances minérales présentes sur le site sont de nature saumâtre, caractérisé en ce que l'on procède à la préparation d'une couche de fond en réalisant un malaxage préalable du sol avec apport d'une dose supplémentaire de chlorure de sodium et en ce que l'on dépose une couche de finition superficielle après dessication de la couche de fond.

12. Procédé selon la revendication 1, dans lequel les substances minérales présentes sur le site comportent de la terre végétale, caractérisé en ce que l'on procède à un apport de sable siliceux ou calcaire avant l'imprégnation au moyen dudit mélange.

13. Procédé selon la revendication 1, caractérisé en ce que l'imprégnation des substances minérales présentes sur le site est effectuée par pulvérisation du mélange liquide sur le site, puis malaxage des substances minérales ainsi traitées par pulvérisation.

## Patentansprüche

1. Verfahren zur Stabilisierung einer lockeren Bodenfläche, insbesondere zum Bau von Verkehrswegen, Straßen, Pisten für Luftfahrzeuge, für den Unterbau von Schienenwegen, für Straßenrandstreifen, Gräben oder zur Herstellung von Lagerungsflächen, steifen Platten oder tragenden Platten sowie für jeglichen starren Belag zur Aufnahme von beweglichen oder unbeweglichen Lasten, wobei das Verfahren folgendes umfaßt: mindestens eine Imprägnierung der auf der Baustelle vorhandenen mineralischen Stoffe mit einem natrium- und/oder kaliumalkalisilikatbasischen Bindemittel, mindestens einem Plastizierzusatzstoff und mindestens ein Reagens in Form einer Flüssigkeit, um ein Kieselerdegel zu bilden, wobei das Verfahren
**dadurch gekennzeichnet** **ist,** daß
es aus einem ersten Abschnitt besteht, bei welchem man eine Mischung in flüssiger Form vorbereitet, welche das Bindemittel, den oder die Plastizierzusatzstoffe und das oder die flüssigen Reagenzien enthält und einen zweiten Abschnitt, bei welchem man vor dem Beginn des Abbindens des Bindemittels die Imprägnierung der mineralischen Stoffe mittels der flüssigen Mischung durchführt; daß man mindestens einen der nachfolgenden Stoffe als flüssiges Reagens verwendet, um ein Kieselerdegel zu bilden: organische Säuren und Methyl- und/oder Äthylester und daß der prozentuale Anteil des in der Mischung enthaltenen flüssigen Lösungsmittels, bezogen auf das Silikatgewicht, zwischen 30 und 150 % beträgt.

2. Verfahren nach Anspruch 1,
**dadurch gekennzeichnet,** daß das flüssige Reagens Wasser enthält.

3. Verfahren nach Anspruch 1,
**dadurch gekennzeichnet,** daß man mindestens einen plastizierenden Zusatzstoff verwendet, der mineralische Stoffe, wie etwa Tone, aufweist.

4. Verfahren nach Anspruch 1,
**dadurch gekennzeichnet,** daß man mindestens einen plastizierenden Zusatzstoff verwendet, der organische Stoffe, wie etwa Kasein, aufweist.

5. Verfahren nach Anspruch 1,
**dadurch gekennzeichnet,** daß man mindestens einen plastizierenden Zusatzstoff verwendet, der pflanzliche Stoffe, wie etwa Pflanzenöle, aufweist.

6. Verfahren nach Anspruch 1,
**dadurch gekennzeichnet,** daß man mindestens einen plastizierenden Zusatzstoff verwendet, der synthetische Stoffe, wie etwa Karboxylmethylzellulose, Natriumsalze, Äthylenglycol, Glycerin, Acryl- und/oder Vinylharze, Bitumenemulsionen, Blanose, aufweist.

7. Verfahren nach Anspruch 1,
**dadurch gekennzeichnet,** daß man der Mischung mineralische Füllstoffe in Form von feingebrochenen mineralischen Teilchen beifügt.

8. Verfahren nach Anspruch 7,
**dadurch gekennzeichnet,** daß man auch Füllmaterial-Schutzstoffe (bzw. -Hemmstoffe) beifügt.

9. Verfahren nach Anspruch 1,
**dadurch gekennzeichnet,** daß die Reagenzien zur Bildung des Kieselerdegels außerdem mindestens einen der folgenden Stoffe aufweisen: Chloride, wie etwa Natriumchlorid und Kalziumchlorid, Sulfate, wie etwa Aluminiumsulfat, Karbonate, wie etwa Natriumbikarbonat, Aluminate, wie etwa Natriumaluminat, fluorierte Produkte, wie etwa Natriumfluorsilikat und Mineralsäuren, die man als Verdünnung und/oder als Suspension in einem flüssigen Medium verwendet.

10. Verfahren nach Anspruch 1,
**dadurch gekennzeichnet,** daß man die auf der Baustelle vorhandenen Mineralstoffe mit der Mischung imprägniert, und zwar bei einer Umgebungstemperatur zwischen 5 und 35° Celsius.

11. Verfahren nach Anspruch 1, bei welchem die auf der Baustelle vorhandenen Mineralstoffe von brackiger (bzw. halbsalziger) Beschaffenheit sind,
**dadurch gekennzeichnet,** daß man eine untere Tragschicht vorbereitet, indem man eine Vormischung des Bodens durchführt mit Zugabe einer zusätzlichen Menge von Natriumchlorid und daß man nach Trocknung der unteren Tragschicht eine Oberflächendeckschicht aufbringt.

12. Verfahren nach Anspruch 1, bei welchem die auf der Baustelle vorhandenen Mineralstoffe Humuserde aufweisen,
**dadurch gekennzeichnet,** daß man vor dem Imprägnieren durch die Mischung Quarz- oder Kalksand zufügt.

13. Verfahren nach Anspruch 1,
**dadurch gekennzeichnet,** daß man die Imprägnierung der auf der Baustelle vorhandenen Mineralstoffe durch Aufspritzen der flüssigen Mischung auf den Boden und dann durch Mischen der durch Bespritzen behandelten Mineralstoffe vornimmt.

## Claims

1. Method for the stabilization of soils, particularly for the construction of communication tracks, roads, aeroplane runways, railroads, road embankments, trenches or for the construction of storage areas, rigid paths or carrying flags and any rigid surface able to bear mobile or immobile loads, the method comprising at least an impregnation of the mineral substances present on the site with a binder made of sodium and/or potassium alkaline silicates, at least one plastifying agent and at least one liquid reactive agent to create a silica gel, the method being characterized in that it comprises a first step of preparing a liquid mixture including said binder, plastifying agent(s) and liquid reactive agent(s), and a second step of impregnating the mineral substances with said liquid mixture before the setting of the binder; in that at least one of the following substances is used as liquid reactive agent to create a silica gel : organic acids and methylic and/or ethylic esters; and in that the percentage of the liquid agent contained in the mixture is comprised between 30 and 150% of the silicates weight.

2. Method according to claim 1, characterized in that the liquid reactive agent includes water.

3. Method according to claim 1, characterized in that at least one plastifying agent comprising mineral substances such as clay is used.

4. Method according to claim 1, characterized in that at least one plastifying agent comprising organic substances such as casein is used.

5. Method according to claim 1, characterized in that at least one plastifying agent comprising vegetable substances such as vegetable oils is used.

6. Method according to claim 1, characterized in that at least one plastifying agent comprising synthetic substances such as carboxymethylcellulose, sodium salts, ethylene-glycol, glycerine, acrylic or vinyl resins, bituminous emulsions, blanose is used.

7. Method according to claim 1, characterized in that mineral loads in form of finely pulverised mineral particles are added in said mixture.

8. Method according to claim 7, characterized in that inhibitors of charge are added in said mixture.

9. Method according to claim 1, characterized in that the reactive agents to create the silica gel further comprise at least one of the following substances : chlorides such as sodium and calcium chlorides, sulphates such as aluminium sulphate, carbonates such as sodium carbonate, aluminates such as sodium aluminate, products containing fluorine such as sodium fluorosilicate and mineral acids, which are used in dilution and/or in suspension in a liquid.

10. Method according to claim 1, characterized in that the impregnation of the mineral substances present on the site with said mixture is done at an ambient temperature between 5 and 35°C.

11. Method according to claim 1, in which the mineral substances present on the site are of a bring nature characterized in that an undercoat is prepared by a previous mixing of the soil with addition of a supplementary amount of sodium chloride and in that a superficial finishing coat is deposited after the drying of the undercoat.

12. Method according to claim 1, in which the mineral substances present on the site contains vegetable earth, characterized in that an addition of siliceous or calcareous material is done before the impregnation with said mixture.

13. Method according to claim 1, characterized in that the impregnation of the mineral substances present on the site is done by a spraying of the liquid mixture on the site and by a mixing procedure of the so-sprayed mineral substances.
